# EUROPÄISCHE PATENTSCHRIFT

(11) **EP 1 553 506 B1**
(45) Veröffentlichungstag und Bekanntmachung des Hinweises auf die Patenterteilung: **26.04.2006**
(21) Anmeldenummer: 04000322.0
(22) Anmeldetag: 09.01.2004
(51) Int. Cl.: G06F 17/30

(54) **Datenfilter in einem Computernetzwerk**
Data filter in a computer network
Filtre de données dans un réseau informatique

(43) Veröffentlichungstag der Anmeldung: 13.07.2005
(73) Patentinhaber: Vodafone Holding GmbH, 40213 Düsseldorf (DE)
(72) Erfinder: Bellanova, Christian, 40476 Düsseldorf (DE)
(74) Vertreter: Weisse, Renate

(56) Entgegenhaltungen:
- US-A- 6 029 195
- US-B1- 6 578 025
- MORITA M ET AL: "INFORMATION FILTERING BASED ON USER BEHAVIOR ANALYSIS AND BEST MATCH TEXT RETRIEVAL" SIGIR '94. DUBLIN, JULY 3 - 6, 1994, PROCEEDINGS OF THE ANNUAL INTERNATIONAL ACM-SIGIR CONFERENCE ON RESEARCH AND DEVELOPMENT IN INFORMATION RETRIEVAL, BERLIN, SPRINGER, DE, Bd. CONF. 17, 3. Juli 1994 (1994-07-03), Seiten 272-281, XP000475327
- SPECHT G ET AL: "Information filtering and personalisation in databases using gaussian curves" IEEE, 18. September 2000 (2000-09-18), Seiten 16-24, XP010519009

## Beschreibung

### Technisches Gebiet

Die Erfindung betrifft eine Einrichtung für ein Computernetzwerk, in welches mehrere Computer informationen von Projekten als Datensätze zu einem Datenbestand einspeisen, der in einem Datenspeicher einer Datenverarbeitungsanlage gespeichert wird, die Einrichtung einen Datenfilter für das Computernetzwerk aufweist, der die Datensätze verschiedener Projekte adaptiv für ein vorgebbares Profil zusammenfasst, wobei das Profil eines Anwenders als Anwenderprofil vorgegeben ist und die Datensätze mil einer Erzeugerkodierung als Filtermerkmal für den Darenfilter versehen sind.

### Stand der Technik

In Computernetzwerken werden viele Computer miteinander verknüpft. Als Internet wird ein weltweites Computernetz, während Intranet als ein firmeninternes Netzwerk bezeichnet wird. Aber auch andere Netzwerkstrukturen sind bekannt. Die Computer, die in einem Computernetzwerk miteinander verknüpft sind, können Daten und Informationen untereinander austauschen, sowie gemeinsam Peripherie, d.h. angeschlossene Geräte, wie Drucker, nutzen. Die Steuerung des Datenverkehrs erfolgt üblicherweise über eine Datenverarbeitungsanlage, die auch als Netzwerkserver bezeichnet wird. Mit geeigneten Protokollen können die Daten und Informationen ausgetauscht werden.

Einige Computer können zu Projektgruppen zusammengeschlossen sein, d.h. die Anwender werden jeweils einem bestimmten Projekt zugeordnet. Dieser Zusammenschluss geschieht häufig auch im Forschungsbereich, in dem sich einige in Forschungsprojekten zusammenschließen. Projektleiter sollten beispielsweise möglichst umfassend von ihrem eigenen Forschungsprojekt informiert sein. So ist für sie jede Information ihrer eigenen Projektgruppe, die über das Computernetzwerk ausgetauscht wird, interessant. Informationen anderer Projektgruppen sind für einen Projektleiter oft weniger interessant. Um jedoch einen Überblick über das Geschehen der anderen Projekte erhalten, muss er sich derzeit alle. Informationen ansehen, die in einem Datenspeicher einer Datenverarbeitungsanlage vorliegen. Dabei sind viele für ihn überflüssige Informationen enthalten.

Es ist bekannt, Datenfilter einzusetzen, die verschiedene Daten nach bestimmten Merkmalen ausfiltern. Nachteil dieser Datenfilter ist, dass sie starr ausgebildet sind und sich bei ändernden Umständen nicht anpassen. Dadurch werden immer Informationen weitergeleitet, die für einen Anwender unter Umständen völlig uninteressant sind.

Das US-Patent 6029195 offenbart eine Einrichtung für einen Computernetzwerk, in welches mehrere Computer Informationen von Projekten als Datensätze zu einem Bestand einspeisen, der in einem Datenspeicher einer Datenverarbeitungsanlage gespeichert wird. Ein Datenfilter der Einrichtung für das Computernetzwerk fast in die Datensütze verschiedener Projekte adaptiv für ein vorgebbares Profil zusammen. Wenn ein Anwenderjedoch seine Wünsche bezüglich der Informationen, welche ihm geliefert werden ändert, muss er entsprechend seinen Anwenderprofil anpassen. In diesem Patent ist nicht vorgesehen dass das Anwenderprofil lernfähig ist und sich selbst an verändernde Gegebenheiten und Umstände adaptiv anpasst. Dort wird ein neuronales Netzwerk beschrieben, jedoch unterstützt es nicht eine adaptive Anpassung des Profils.

### Offenbarung der Erfindung

Aufgabe der Erfindung ist es daher, eine Lösung zu finden, wie aus einer Fülle von informationen eines Computemetzwerkes, in dem Projektgruppen mit verschiedenen Projekten miteinander verknüpft sind, nur solche gelieferte Informationen werden, die für eine bestimmte Person interessant sein könnte.

Erfindungsgemäß wird die Aufgabe dadurch gelöst, dass bei einer Einrichtung der eingangs genannten Art für ein Computemetzwerk, in welches mehrere Computer Informationen von Projekten als Datensätze zu einem Datenbestand einspeisen, die Profile jeweils durch Unterstützung von einem neuronalen Netzwerk lernfähig zur adaptiven Anpassung an sich verändernde Gegebenheiten und Umstände ausgebildet sind.

Die Erfindung beruht auf dem Prinzip, eine Einrichtung mit einem Datenfilter zu schaffen, der die Daten und Informationen von Projekten nach einem erstellten Profil ausgibt. Die Daten und Informationen werden dazu in einem Computemetzwerk zentral gesammelt und in einem Speicher jeweils als Datensatz gespeichert. Das Computernetzwerk setzt sich aus einem Verbund von einzelnen Computern zusammen, die miteinander gekoppelt sind. Die einzelnen Computer des Computernetzwerkes sind wiederum zu Projektgruppen zusammengeschlossen. Eine Projektgruppe ist für ein Projekt verantwortlich, wie beispielsweise verschiedene Forschungsprojekte, Projekte zum Erstellen von Wirtschaftsreporten oder Statisfädokumentationen, sowie Produkt- oder Vertriebsverwaltung einer Firma. Die Daten und Informationen werden von diesen einzelnen Computern bzw. deren Bedienern erzeugt und in das Computernetzwerk eingespeist. In dem Datenfilter wird ein bestimmtes Profil hinterlegt, das sich z.B. auf eine Person bezieht. Nach diesem hinterlegten Profil sucht der Datenfilter die für die Person relevanten Daten und Informationen zu bestimmten Projekten aus dem Speicher einer Datenverarbeitungsanlage. Die Suche erfolgt adaptiv, d.h. die Informationen oder Daten werden nach einem anwenderspezifischen Profil durchsucht. Dies hat den Vorteil, dass z.B. ein Projektsleiter nicht alle Dokumente erhält, sondern nur die, die ihn unmittelbar betreffen, oder solche, die er zu erhalten wünscht.

Als vorteilhafte Ausgestaltung der erfindungsgemäßen Einrichtung für ein Computernetzwerk hat sich erwiesen, wenn die Datensätze mit einer Erzeugercodierung als Filtermerkmal für den Datenfilter versehen sind. Durch diese Maßnahme kann ein Datensatz unmittelbar einem Erzeuger und damit einem Projekt zugeordnet werden. Der Datenfilter kann so auf einfache Weise alle so erzeugten Datensätze eines Erzeugers aus allen Datensätzen herausfiltern.

Eine weitere vorteilhafte Ausbildung der Erfindung ergibt sich, indem die Datensätze mit einer Inhaltscodierung als Filtermerkmal für den Datenfilter versehen sind. Damit besteht nunmehr die Möglichkeit, die Datensätze nach Inhalt zu sortieren und die Datensätze mit einem vorher in dem Profil festgelegten Inhalt mittels des Datenfilters herausfiltern.

Vorteilhafterweise lässt sich das Profil in der erfindungsgemäßen Einrichtung veränderbar ausbilden. Damit kann der Datenfilter an sich ändernde. Bedingungen angepasst werden. Die Änderung des Profils kann von der Person, auf die sich das Profil bezieht, oder von einem Administrator, der das Computernetzwerk verwaltet vorgenommen werden.

Eine bevorzugte Ausbildung der Erfindung erhält man, indem das Profil eines Anwenders als Anwenderprofil vorgegeben ist. Dadurch kann festgelegt werden, welche Informationen zu einer Person gelangen dürfen.

In einer weiteren vorteilhaften Ausgestaltung der Erfindung ist der Datenfilter als neuronales Netz lernfähig zur Anpassung an sich verändernde Profile und/oder Projekte ausgebildet. Damit passt sich der Datenfilter von selbst an sich ändernde Gegebenheiten an, um die richtigen Informationen, Daten und andere digitale Dokumente herauszufiltern.

In einer bevorzugten Ausbildung der erfindungsgemäßen Einrichtung sind Filtermittel vorgesehen, welche profilspezifisch und/oder projektspezifisch die Information der Datensätze reduziert. Durch diese Maßnahme können Informationen, bevor sie einem Anwender zugeordnet und weitergeleitet werden, auf die Anzahl der Informationen ein wünschenswertes Minimum reduziert werden, da ansonsten häufig eine unüberschaubare Menge an Informationen weitergeleitet wird. Vorteilhafterweise sind die Filtermittel lernfähig als neuronale Netze ausgebildet

Weitere Vorteile ergeben sich aus dem Gegenstand der Unteransprüche sowie der Zeichnung mit der dazugehörigen Beschreibung.

### Kurze Beschreibung der Zeichnung

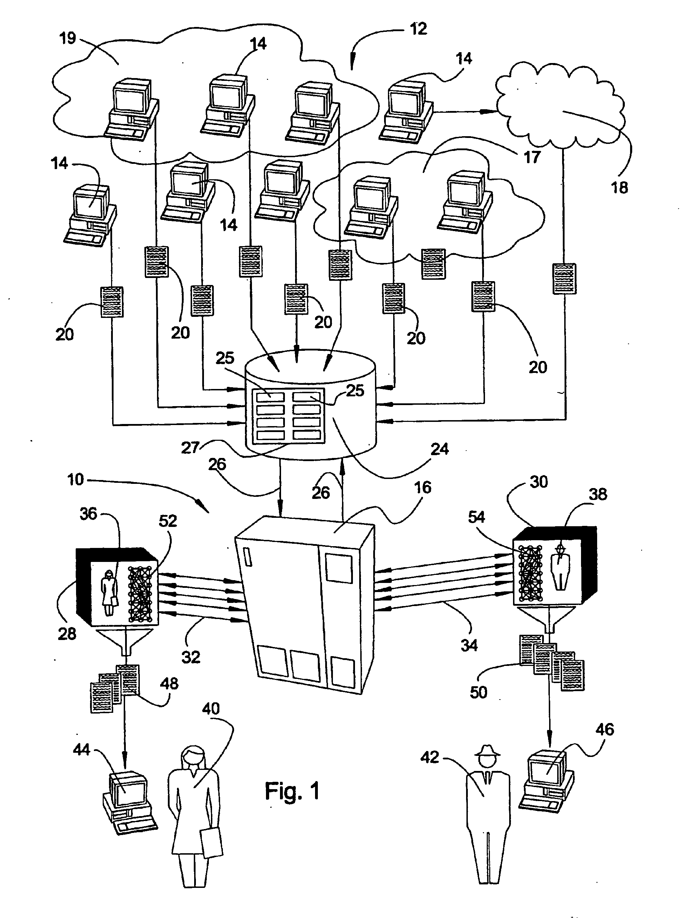

- Fig. 1: zeigt ein Ausführungsbeispiel einer erfindungsgemäßen Einrichtung für ein Computernetzwerk.

### Bevorzugtes Ausführungsbeispiel

Fig. 1 zeigt in einer Prinzipskizze ein Ausführungsbeispiel einer erfindungsgemäßen Einrichtung 10 für ein Computernetzwerk 12. Das Computernetzwerk 12 besteht aus zahlreichen Computern 14, die sternförmig über eine zentrale Datenverarbeitungsanlage 16 miteinander verbunden sind. An dem Computernetzwerk 12 können theoretisch beliebig viele Computer 14, beispielsweise auch über Intra- oder Internet 18, angeschlossen sein. Verschiedene Computer 14 sind zu Projektgruppen zusammengeschlossen, d.h. sie gehören einem Projekt 17 bzw. 19 an.

Alle digitalen Daten oder Informationen 20 werden über die Datenverarbeitungsanlage 16 zwischen den Computern 14 untereinander ausgetauscht. Pfeile 22 symbolisieren die Verbindungen und den Datenaustausch zwischen den Computern 14 bzw. der Datenverarbeitungsanlage 16. Die Daten und die Informationen 20, die zwischen den Computern 14 ausgetauscht werden sollen, werden in einem Datenspeicher 24 der Datenverarbeitungsanlage 16 zwischengespeichert Der Datenspeicher 24 ist symbolisch aus der Datenverarbeitungsanlage 16 herausgezogen. Datenspeicher 24 steht aber in jedem Fall mit der prozessorgesteuerten Datenverarbeitungsanlage 16 zur Datenverarbeitung in Verbindung, Pfeile 26. Die Datenverarbeitungsanlage 16 bildet aus den Daten und Informationen 20 in dem Datenspeicher 24 Datensätze 25. Die Datensätze 25 beinhalten neben den reinen Daten und der reinen Information 20 beispielsweise den Namen des Erzeugers, welchem Projekt der Erzeuger angehört und von welchem Computer 14 des Computernetzwerkes 12 diese Daten und Informationen 20 stammen. Die Datensätze 25 sind zu einer verarbeitbaren Datenbank 27 zusammengefasst.

Mit der Datenverarbeitungsanlage 16 sind beispielhaft zwei Datenfilter 28, 30 über Datenleitungen 32, 34, welche als Datenbus ausgebildet sein können, verknüpft. Die Datenfilter 28, 30 haben über die Datenverarbeitungsanlage 16 Zugriff auf den Datenspeicher 24 und damit auf alle Daten und Informationen 20, die durch das Computernetzwerk 12 geführt werden. Die Datenfilter 28, 30 selektieren die Daten und Informationen 20 mittels der in dem Datenspeicher 24 vorliegenden Datenbank 27.

Die Datenfilter 28, 30 verfügen jeweils über ein Profil 36, 38, welches auf die Personen 40. 42 zugeschnitten ist. Die Personen 40, 42 haben über ihre Computer 44 bzw. 46 Zugang zum Computernetzwerk 12, um an die Daten und Informationen 20 zu gelangen. Die Datenfilter 28, 30 befinden sich zwischen den Computern 44, 46 und der Datenverarbeitungseinheit 16, so dass nur solche Daten und Informationen 48, 50 an die Computer 44, 46 der Personen 40, 42 geleitet werden, welche nach den entsprechend angepassten Profilen 36, 38 aus der Datenbank 27 selektiert werden.

Die Selektion der Informationen 48, 50 erfolgt nach den individuellen Profilen 36, 38, die in den Datenfiltern 28, 30 vorgesehen sind. Diese Profile 36, 38 sind einstellbar ausgebildet, so dass sie manuell verändert werden können. Hier kann beispielsweise eingestellt werden, von welchen Projekten 17, 19 Datensätze 25 und aus welchem Zeitraum diese sein sollen. Die so selektierten Datensätze 25 mit den entsprechenden Informationen 48, 50 werden für jedes Anwenderprofil 36, 38 zusammengefasst und an die Computer 44, 46 der Personen 40, 42 bzw. Anwender übermittelt. Zudem sind die Profile 36, 38 lernfähig und werden jeweils von einem neuronalen Netzwerk 52, 54 unterstützt Die Profile 36, 38 sind dadurch in der Lage, sich selbständig an sich verändernde Gegebenheiten und Umstände adaptiv anzupassen. Durch die neuronalen Netzwerke 52, 54 können Datensätze 25 selektieren, die vielleicht in das Profil 36, 38 hineinpassen und für den Anwender interessant sein können. Entsprechend können selbständig uninteressante Datensätze 25 durch solche Datenfilter 28, 30 aussortiert werden. Die Datenfilter 28, 30 sind insbesondere über die neuronalen Netze 52, 54 in der Lage, die Informationen 48, 50 in ihrem Informationsgehalt zu reduzieren. Diese Reduzierung erfolgt wiederum anwenderspezifisch. Die Person 42 möchte beispielsweise nur schlagwortartige Stichworte zu jeder Information 20 aus dem Projekt 19, hingegen möchte er über das Projekt 17 vollständige Informationen 20 erhalten. Für die Person 40 kann der Sachverhalt hingegen genau umgekehrt liegen.

## Patentansprüche

1. Einrichtung (10) für ein Computernetzwerk (12), in welches mehrere Computer (14, 44, 46) Informationen (20) von Projekten (17, 19) als Datensätze (27) zu einem Datenbestand einspeisen, der in einem Datenspeicher (24) einer Datenverarbeitungsanlage (16) gespeichert wird, die Einrichtung einen Datenfilter (28, 30) für das Computernetzwerk (12) aufweist der die Datensätze (25) verschiedener Projekte (17, 19) adaptiv für ein vorgebbares Profil (36, 38) zusammenfasst, wobei das Profil (36, 38) eines Anwenders (40, 42) als Anwenderprofil vorgegeben ist und die Datensätze (25) mit einer Erzeugerkodierung als Filtermerkmal für den Datenfilter (28, 30) versehen sind, **dadurch gekennzeichnet, dass** die Profile (36, 38) jeweils durch Unterstützung von einem neuronalen Netzwerk (52, 54) lernfähig zur adaptiven Anpassung an sich verändernde Gegebenheiten und Umstände ausgebildet sind.

2. Einrichtung (10) für ein Computernetzwerk (12) nach Anspruch 1, **dadurch gekennzeichnet, daas** der Datenfilter (28,30) Mittel enthält, die Datensätze mit einer Inhaltokodierung als Filtermerkmal verarbeiten.

3. Einrichtung (10) für ein Computernetzwerk (12) nach einem der Ansprüche 1 bis 2 **dadurch gekennzeichnet, dass** das Profil (36, 38) veränderbar ausgebildet ist.

4. Einrichtung (10) für ein Computernetzwerk (12) nach einem der Ansprüche 1 bis 3 **5, dadurch gekennzeichnet, dass,** der Datenfilter (28, 30) als neuronales Netz (52, 54) lernfähig zur Anpassung an sich verändernde Profile (36, 38) und/oder Projekte (17, 19) ausgebildet ist.

5. Einrichtung (10) für ein Computernetzwerk (12) nach einem der Ansprüche 1 bis 4 6, **dadurch gekennzeichnet, dass** Filtermittel (28, 30) zur profilspezifischen und/oder projektspezifischen Reduzierung der Information (20) der Datensätze (25 vorgesehen sind.

6. Einrichtung (10) für ein Computernalzwerk (12) nach Anspruch 5, **dadurch gekennzeichnet, dass** die Filtermittel (28, 30) lernfähig als neuronale Netze (52, 54) ausgebildet sind.

## Claims

1. Device (10) for a computer network (12) adapted to be fed with information (20) from a plurality of computers (14, 44, 46) about projects (17, 19) in the form of data sets (27) for a data base (24) stored in a data memory (24) of a data processing installation (16), said device comprising a data filter (28, 30) for the computer network (12) adaptively pooling the data sets (25) of different projects (17, 19) for a set profile (36, 38), wherein the profile (36, 38) of a user (40, 42) is given in the form of a user profile and the data sets (25) are provided with a producer code as a filter attribute for the data filter (28, 30), **characterised in that** the profiles (36, 38) are designed to be adaptive with the support of a neural network (52, 54) for the adaptive adjustment of changing environments and circumstances.

2. Device (10) for a computer network (12) according to claim 1, **characterised in that** the data filter (28, 30) comprises means which process the data sets with a content code as a filter attribute.

3. Device (10) for a computer network (12) according to any of claims 1 to 2, **characterised in that** the profile (36, 38) is variable.

4. Device (10) for a computer network (12) according to any of claims 1 to 3, **characterised in that** the data filter (28, 30) is an adaptive neural network (52, 54) to be adapted to the variable profiles (36, 38) and/or projects (17, 19).

5. Device (10) for a computer network (12) according to any of claims 1 to 4, **characterised in that** filter means (28, 30) are provided for the profile specific and/or project specific reduction of information (20) of the data sets (25).

6. Device (10) for a computer network (12) according to claim 5, **characterised in that** the filter means (28, 30) are adaptive neural networks (52, 54).

## Revendications

1. Dispositif (10) destiné à un réseau d'ordinateurs (12) dans lequel plusieurs ordinateurs (14,44,46) emmagasinent des informations (20) concernant des projets (17,19) sous forme d'enregistrements de données (27) pour en faire un stock de données qui est mémorisé dans une mémoire de données (24) d'un dispositif de traitement de données (16), le dispositif comprend un filtre de données (28,30) destiné au réseau d'ordinateurs (12) qui réunit les enregistrements de données (25) des différents projets (17,19) de façon adaptative sous forme de profil prédéfini (36,38), le profil (36,38) d'un utilisateur (40,42) étant prédéfini sous forme de profil d'utilisateur et les enregistrements de données (25) étant pourvus d'un auteur codé se présentant sous forme de caractéristique de filtre destinée au filtre de données (28,30), **caractérisé en ce que** les profils (36,38) sont réalisés à chaque fois grâce au soutien d'un réseau neuronal (52,54) de façon à être capables d'apprendre à s'adapter de façon adaptative à toute situation de changement.

2. Dispositif (10) destiné à un réseau d'ordinateurs (12) selon la revendication 1, **caractérisé en ce que** le filtre de données (28,30) comprend des moyens qui traitent les enregistrements de données à l'aide d'un contenu codé se présentant sous forme de caractéristique de filtre.

3. Dispositif (10) destiné à un réseau d'ordinateurs (12) selon l'une quelconque des revendications 1 à 2, **caractérisé en ce que** le profil (36,38) est réalisé de façon à pouvoir être modifié.

4. Dispositif (10) destiné à un réseau d'ordinateurs (12) selon l'une quelconque des revendications 1 à 3, **caractérisé en ce que** le filtre de données (28,30) est réalisé sous forme de réseau neuronal (52,54) de façon à être capable d'apprendre à s'adapter à des changements de profils (36,38) et/ou de projets (17,19).

5. Dispositif (10) destiné à un réseau d'ordinateurs (12) selon l'une quelconque des revendications 1 à 4, **caractérisé en ce que** des moyens de filtre (28,30) sont prévus afin de réduire en fonction du profil et/ou en fonction du projet l'information (20) concernant les enregistrements de données (25).

6. Dispositif (10) destiné à un réseau d'ordinateurs (12) selon la revendication 5, **caractérisé en ce que** les moyens de filtre (28,30) sont réalisés sous forme de réseaux neuronaux (52,54) de façon à être capables d'apprendre.
